# EUROPÄISCHE PATENTSCHRIFT

(11) **EP 4 438 428 B1**
(45) Veröffentlichungstag und Bekanntmachung des Hinweises auf die Patenterteilung: **03.12.2025**
(21) Anmeldenummer: 24159770.7
(22) Anmeldetag: 26.02.2024
(51) Int. Cl.: B60W 30/192

(54) **VERFAHREN UND MOTORSTEUERUNG ZUM BETRIEB EINES KRAFTFAHRZEUGS MIT BRENNKRAFTMASCHINE NACH EINEM KALTSTART**
METHOD AND CONTROL UNIT FOR OPERATION OF A MOTOR VEHICLE WITH AN INTERNAL COMBUSTION ENGINE AFTER A COLD START
PROCÉDÉ ET DISPOSITIF DE CONTRÔLE POUR OPÉRATION D'UN VÉHICULE AUTOMOBILE À MOTEUR À COMBUSTION INTERNE APRÈS UN DÉMARRAGE À FROID

(30) Priorität: 27.03.2023 DE 102023107614; 28.07.2023 DE 102023120217
(43) Veröffentlichungstag der Anmeldung: 02.10.2024
(73) Patentinhaber: VOLKSWAGEN AG, 38440 Wolfsburg (DE)
(72) Erfinder: Westendorf, Johannes, 38104 Braunschweig (DE); Bippes, Michael, 38112 Braunschweig (DE)
(74) Vertreter: Bungartz, Florian

(56) Entgegenhaltungen:
- EP-A1- 3 909 823
- DE-A1- 102021 109 520
- DE-B4- 10 081 460

## Beschreibung

Die Erfindung betrifft ein Verfahren zum Betreiben eines Kraftfahrzeugs mit einer Brennkraftmaschine, die einen Verbrennungsmotor und einen Abgasstrang mit mindestens einer Abgasnachbehandlungsvorrichtung umfasst.

Um möglichst geringe Schadstoffemissionen einer Brennkraftmaschine zu realisieren, sollten die in den Abgasstrang integrierten Abgasnachbehandlungsvorrichtungen, die insbesondere ein oder mehrere Katalysatoren sowie ein Partikelfilter sein können, möglichst stets Temperaturen aufweisen, die oberhalb der jeweiligen Anspringtemperaturen (auch "Light-off"-Temperaturen genannt) liegen, ab denen von einer weitestgehenden Wirksamkeit hinsichtlich der jeweils vorgesehenen Abgasnachbehandlung ausgegangen werden kann. Nach einem Kaltstart der Brennkraftmaschine, bei dem die Abgasnachbehandlungsvorrichtungen Temperaturen aufweisen können, die unterhalb der jeweiligen Anspringtemperatur liegen, sollten die Temperaturen zumindest einiger der Abgasnachbehandlungsvorrichtungen möglichst schnell die jeweilige Anspringtemperatur erreichen. Um dies zu gewährleisten, ist es bekannt, Abgasnachbehandlungsvorrichtungen aktiv zu beheizen, was zum einen mittels hierfür vorgesehener Heizvorrichtungen, die beispielsweise elektrische Heizelemente umfassen oder als Brenner ausgebildet sein können, möglich ist. Weiterhin können sogenannte innermotorische Maßnahmen umgesetzt werden, die darauf abzielen, durch einen gezielten Betrieb des Verbrennungsmotors mit einem relativ schlechten Wirkungsgrad relativ heißes Abgas zu erzeugen, so dass über das Abgas eine relativ schnelle Erwärmung der Abgasnachbehandlungsvorrichtungen erreicht werden kann.

Aufgrund weiter verschärfter Schadstoffemissionsvorschriften können auch diese Maßnahmen nicht ausreichend sein, da diese ein Wirksamwerden der Abgasnachbehandlungsvorrichtungen nur beschleunigen, nicht jedoch unmittelbar mit der Inbetriebnahme des Verbrennungsmotors gewährleisten. Somit könnte das Problem bestehen, dass Schadstoffemissionsgrenzwerte nicht eingehalten werden, wenn ein Kraftfahrzeug unmittelbar nach einem Kaltstart der zugehörigen Brennkraftmaschine in einen Fahrbetrieb übergeht, wozu der Verbrennungsmotor der Brennkraftmaschine eine relativ große Leistung bereitstellen muss, die mit einem entsprechend großen Abgasmassenstrom einhergeht.

Die DE 10 2014 220 442 A1 offenbart ein Verfahren zum Betreiben eines Hybridfahrzeugs mit einer Brennkraftmaschine und einem elektrischen Traktionsmotor, wobei bei einem Anhängerbetrieb, d.h. wenn ein Anhänger von dem Hybridfahrzeug gezogen wird, die Brennkraftmaschine automatisch deaktiviert wird, wenn die erforderliche Fahrleistung ausschließlich von dem elektrischen Traktionsmotor bereitgestellt werden kann, und die Brennkraftmaschine automatisch gestartet wird, sofern die erforderliche Fahrleistung nicht ausschließlich von dem elektrischen Traktionsmotor bereitgestellt werden kann.

Die DE 10 2021 204 100 A1 beschreibt ein Verfahren zum Konfigurieren eines Elektrofahrzeugs in Vorbereitung auf eine geplante Fahrt mit einem Anhänger, wodurch der Anhängerbetrieb in die Routenplanung, insbesondere hinsichtlich der erforderlichen Fahrtunterbrechungen zum Laden einer Traktionsbatterie des Elektrofahrzeugs, einbezogen werden kann.

Bei dem in der US 2016/0129803 A1 offenbarten Verfahren ist vorgesehen, die Reichweite während einer Fahrt eines Elektrofahrzeugs vorauszusagen, wobei auch hierbei berücksichtigt wird, ob ein Anhängerbetrieb vorliegt oder nicht.

Die DE 10 2017 001 911 A1 offenbart ein Verfahren zur Abschätzung der Bruttomasse eines Kraftfahrzeugs, wobei basierend auf dieser Abschätzung beispielsweise eine alternative Leistungssteuerung eines Verbrennungsmotors umgesetzt werden kann, bei der die einer gegebenen Fahrpedalstellung entsprechende Motorleistung proportional zur abgeschätzten Bruttomasse gesteuert wird.

Die EP 2 088 304 A2 beschreibt ein Verfahren, bei dem ein maximaler Drehmomentsollwert, den eine Brennkraftmaschine eines Kraftfahrzeugs erzeugen kann, in Abhängigkeit von einer Masse des Kraftfahrzeugs verändert wird, wobei dieser umso kleiner ist, je größer die Maße des Kraftfahrzeugs ist.

Die DE 10 2021 109 520 A1 offenbart ein Verfahren, bei dem ein Fahrbetrieb eines Fahrzeugs während eines Zeitintervalls nach dem Kaltstart des Verbrennungsmotors unterbunden wird.

Gemäß der EP 3 909 823 A1 wird im Automatikgetriebe eines Fahrzeugs erst dann ein Gang eingelegt, wenn der Katalysator ausreichend vorgeheizt ist.

Die DE 100 81 460 B4 offenbart ein Verfahren zur Anpassung eines Anfahrmoments abhängig von der Beladung eines Fahrzeugs beziehungsweise vom Vorhandensein eines Anhängers.

Der Erfindung liegt die Aufgabe zugrunde, das Schadstoffemissionsverhalten einer Brennkraftmaschine eines Kraftfahrzeugs zu verbessern.

Diese Aufgabe ist bei einem Verfahren gemäß dem Patentanspruch 1 gelöst. Eine für eine Ausführung eines solchen Verfahrens eingerichtete Motorsteuerung ist Gegenstand des Patentanspruchs 15. Vorteilhafte Ausführungsformen des erfindungsgemäßen Verfahrens sind Gegenstände der weiteren Patentansprüche und ergeben sich aus der nachfolgenden Beschreibung der Erfindung.

Erfindungsgemäß ist ein Verfahren zum Betreiben eines Kraftfahrzeugs vorgesehen, wobei das Kraftfahrzeug eine Brennkraftmaschine umfasst, die einen Verbrennungsmotor und einen Abgasstrang mit mindestens einer Abgasnachbehandlungsvorrichtung aufweist. Nach einem Kaltstart der Brennkraftmaschine, bei dem zumindest die Abgasnachbehandlungsvorrichtung eine Temperatur aufweist, die unterhalb einer Anspringtemperatur liegt und die insbesondere im Wesentlichen (z.B. bis zu 10°C Abweichung) der jeweiligen Umgebungstemperatur entsprechen kann, wird ein Betrieb des Verbrennungsmotors bezüglich des von diesem abgebbaren Drehmoments mittels einer Motorsteuerung in Abhängigkeit von der Temperatur der Abgasnachbehandlungsvorrichtung limitiert.

Ein Limitieren des Betriebs des Verbrennungsmotors bezüglich des abgebbaren Drehmoments soll verhindern, dass der Verbrennungsmotor während eines Aufwärmbetriebs, der sich insbesondere an einen Kaltstart anschließen kann und bei dem die mindestens eine Abgasnachbehandlungsvorrichtung eine unterhalb ihrer Anspringtemperatur liegende Temperatur aufweist, mit einer zu großen Leistungsabgabe betrieben wird, was mit einem entsprechend großen Abgasmassenstrom einhergehen würde. Dies könnte dazu führen, dass mittels der mindestens einen Abgasnachbehandlungsvorrichtung keine Abgasnachbehandlung bewirkt werden kann, die ausreicht, um geltende Schadstoffemissionsgrenzwerte einzuhalten.

Die Limitierung des Betriebs des Verbrennungsmotors bezüglich des abgebbaren Drehmoments in Abhängigkeit von der Temperatur der mindestens einen Abgasnachbehandlungsvorrichtung kann vorteilhafterweise bis zum Erreichen der Anspringtemperatur der Abgasnachbehandlungsvorrichtung durchgeführt werden. Weiterhin kann diese Limitierung derart variabel sein, dass diese kontinuierlich mit steigender Temperatur der Abgasnachbehandlungsvorrichtung verringert wird. Dadurch kann ein Nachteil für den Betrieb des Kraftfahrzeugs, der sich aus der Limitierung bezüglich des abgebbaren Drehmoments ergeben kann, möglichst minimiert werden, indem die Limitierung temperaturabhängig nur so weit aufrechtgehalten wird, wie dies für ein Einhalten von Schadstoffemissionsgrenzwerten erforderlich ist.

Erfindungsgemäß ist weiterhin vorgesehen, einen Fahrbetrieb des Kraftfahrzeugs bis zum Erreichen eines Mindestgrenzwerts des abgebbaren Drehmoments zu verhindern. Dadurch wird verhindert, dass ein Fahrbetrieb durchgeführt wird, obwohl durch die Limitierung bezüglich des abgebbaren Drehmoments dieser (noch) nicht sinnvoll durchführbar wäre, beispielsweise weil ein Beschleunigungsvermögen des Kraftfahrzeugs zu sehr eingeschränkt wäre. Insbesondere kann durch ein temporäres Verhindern eines Fahrbetriebs des Kraftfahrzeugs ermöglicht werden, den Verbrennungsmotor nach einem Kaltstart zunächst definiert eine Zeit lang in einem Leerlauf zu betreiben, in dem ein möglichst minimaler Abgasmassenstrom von diesem erzeugt wird, was sich entsprechend positiv auf das Schadstoffemissionsverhalten auswirken kann.

Ein temporäres Verhindern eines Fahrbetriebs des Kraftfahrzeugs kann von einem Fahrer des Kraftfahrzeugs als Beeinträchtigung angesehen werden, so dass diese Maßnahme auf ein nötiges Minimum reduziert werden sollte. Daher ist erfindungsgemäß vorgesehen, dass der Mindestgrenzwert in Abhängigkeit von einem Fahrwiderstand des Kraftfahrzeugs, der für den sich anschließenden Fahrbetrieb zu erwarten ist, variiert wird. Dabei kann vorgesehen sein, dass der Mindestgrenzwert bei einem relativ kleinen erwarteten Fahrwiderstand relativ klein und bei einem relativ großen erwarteten Fahrwiderstand relativ groß gewählt wird. Folglich kann zumindest ein erster Mindestgrenzwert bei einem ersten erwarteten Fahrwiderstand und ein zweiter Mindestgrenzwert bei einem zweiten erwarteten Fahrwiderstand vorgesehen sein, wobei der erste Mindestgrenzwert kleiner als der zweite Mindestgrenzwert und der erste Fahrwiderstand kleiner als der zweite Fahrwiderstand ist.

Um eine Limitierung des Betriebs der Brennkraftmaschine bezüglich des abgegebenen Drehmoments und insbesondere auch ein Verhindern eines Fahrbetriebs des Kraftfahrzeugs zeitlich möglichst zu minimieren, kann vorzugsweise vorgesehen sein, dass während des Aufwärmbetriebs Maßnahmen für ein möglichst schnelles Aufheizen der mindestens einen Abgasnachbehandlungsvorrichtung durchgeführt werden. Diese Maßnahmen können insbesondere ein aktives Heizen der Abgasnachbehandlungsvorrichtung mittels beispielsweise einer elektrischen Heizvorrichtung und/oder eines (einen Brennstoff verbrennenden) Brenners sein oder umfassen. Weiterhin können diese Maßnahmen einen (Heiz-)Betrieb des Verbrennungsmotors, in dem dieser gezielt relativ heißes Abgas erzeugt, umfassen. Dies kann beispielsweise durch eine Spätverstellung eines Zündzeitpunkts für ein Verbrennen von Kraftstoff in Brennräumen des Verbrennungsmotors realisiert werden. Ein solcher Heizbetrieb des Verbrennungsmotors kann insbesondere auch während des Verhinderns des Fahrbetriebs vorgesehen sein, weil dann die Maßnahmen auch derart ausgeführt werden können, dass der Betrieb des Verbrennungsmotors primär oder ausschließlich für die Erzeugung möglichst heißen Abgases optimiert ist, ohne dass auf eine ausreichend gute "Fahrbarkeit" der Brennkraftmaschine Rücksicht genommen werden muss.

Vorzugsweise kann vorgesehen sein, dass als Maß für den zu überwindenden Fahrwiderstand ein Vorhandensein oder ein Fehlen eines an das Kraftfahrzeug angekoppelten Anhängers genutzt wird. Da ein Vorhandensein eines Anhängers den Fahrwiderstand für das Kraftfahrzeug erheblich vergrößern kann, sollte ein ausreichend hoher Mindestgrenzwert des abgebbaren Drehmoments vorliegen, bevor ein Fahrbetrieb des Kraftfahrzeugs mit Anhänger freigegeben wird. Fehlt ein solcher Anhänger, kann dagegen ein Fahrbetrieb des Kraftfahrzeugs schon bei einem deutlich kleineren Mindestgrenzwert für das von dem Verbrennungsmotor abgebbare Drehmoment freigegeben werden, was durch die erfindungsgemäße Variabilität bezüglich dieses Mindestgrenzwerts ermöglicht wird. Folglich wird verhindert, dass bei einem erfindungsgemäß betriebenen Kraftfahrzeug, das grundsätzlich für einen Anhängerbetrieb geeignet und durch das Vorhandensein einer Anhängekupplung entsprechend ausgerüstet ist, unnötig lange ein Fahrbetrieb verhindert wird, auch wenn diesem kein Anhänger zugeordnet ist.

Als Anhänger gilt jegliche Vorrichtung, die bestimmungsgemäß an eine Anhängekupplung des Kraftfahrzeugs angekoppelt werden kann. Darunter fallen insbesondere Anhänger im klassischen Sinn, die selbst Fahrzeuge mit mindestens einer Achse mit Rädern sind, dabei jedoch keinen eigenen Antrieb oder lediglich einen Unterstützungsantrieb aufweisen. Erfindungsgemäß werden als Anhänger jedoch auch Lastenträger ohne eigene Räder, die beispielsweise für einen Transport von Fahrrädern vorgesehen sind, verstanden, die an die Anhängekupplung angekoppelt und von dieser getragen werden.

Vorzugsweise kann vorgesehen sein, dass das Vorhandensein oder das Fehlen des Anhängers automatisch von der Motorsteuerung ermittelt wird. Dadurch kann vermieden werden, dass von einem Fahrer des Kraftfahrzeugs durch eine entsprechende Eingabe an einer Bedieneinheit des Kraftfahrzeugs angegeben werden muss, ob ein Anhängerbetrieb vorliegt oder nicht. Eine solche "manuelle" Wahl bezüglich eines Anhängerbetriebs, die ebenfalls erfindungsgemäß umsetzbar sein kann, kann von dem Fahrer als Beeinträchtigung bezüglich einer Nutzung des Kraftfahrzeugs angesehen werden. Zudem kann eine solche manuelle Wahl auch eine Fehlerquelle mit potenziell negativen Folgen bezüglich der Schadstoffemissionen darstellen. Sofern eine solche manuelle Wahl jedoch vorgesehen ist, kann vorzugsweise eine entsprechende (automatisch erscheinende) Abfrage von der Motorsteuerung an der Bedieneinheit vorgesehen sein. Eine solche Abfrage kann dann beispielsweise mit jedem Start der Brennkraftmaschine vorgesehen sein.

Für eine automatische Ermittlung bezüglich des Vorhandenseins oder des Fehlens des Anhängers kann vorzugsweise vorgesehen sein, dass ein Belegungszustand eines Steckverbinders des Kraftfahrzeugs, der Teil einer elektrischen Leistungsversorgung für den Anhänger ist, ermittelt wird. Über eine solche elektrische Leistungsversorgung kann insbesondere eine Beleuchtungseinrichtung des Anhängers von dem Kraftfahrzeug mit elektrischer Energie und/oder Steuersignalen versorgt werden. Eine solche elektrische Leistungsversorgung kann den Steckverbinder des Kraftfahrzeugs und einen Gegensteckverbinder des Anhängers umfassen, die für einen Anhängerbetrieb des Kraftfahrzeugs lösbar miteinander verbunden werden. Ist eine solche Steckverbindung ausgebildet, kann dies von der Motorsteuerung als Vorhandensein des Anhängers erkannt und entsprechend berücksichtigt werden. Fehlt dagegen eine solche Steckverbindung kann von der Motorsteuerung davon ausgegangen werden, dass kein Anhängerbetrieb vorliegt. Eine solche automatische Erkennung bezüglich des Vorhandenseins oder des Fehlens des Anhängers kann besonders einfach und damit kostengünstig umsetzbar sein. Insbesondere erfordert dies keine strukturelle Änderung an dem Kraftfahrzeug und/oder an dem Anhänger. Alternative Möglichkeiten, wie beispielsweise eine Sensorik, die Kräfte, die von einem angekoppelten Anhänger auf die Anhängekupplung ausgeübt werden, ermittelt, können ebenfalls umsetzbar sein. Weiterhin ist es möglich, dass bei einer demontierbaren Ausgestaltung der Anhängekupplung oder bei einer Ausgestaltung, bei der die Anhängekupplung von einer inaktiven, d.h. nicht für ein Ankoppeln eines Anhängers geeigneten Stellung, in eine aktive, d.h. für ein Ankoppeln eines Anhängers geeignete, Stellung bewegbar, insbesondere schwenkbar ist, eine Ermittlung bezüglich des Vorhandenseins oder des Fehlens des Anhängers basierend auf dem Funktionszustand der Anhängekupplung, d.h. montiert oder demontiert beziehungsweise aktive oder inaktive Stellung, erfolgen kann.

Gemäß einer bevorzugten Ausführungsform eines erfindungsgemäßen Verfahrens kann vorgesehen sein, dass als ein Maß für den zu überwindenden Fahrwiderstand eine Masse des Kraftfahrzeugs und/oder eine Masse des Anhängers genutzt wird, weil auch diese Massen in erheblichen Maßen den zu überwindenden Fahrwiderstand beeinflussen und damit hinsichtlich des Mindestgrenzwerts des abgebbaren Drehmoments berücksichtigt werden sollten. Eine Berücksichtigung der Masse des Anhängers kann dabei von besonderer Bedeutung sein, weil diese in deutlich größerem Maße den zu überwindenden Fahrwiderstand des Kraftfahrzeugs beeinflussen kann, da die Gesamtmasse des Anhängers den zu überwindenden Fahrwiderstand in Abhängigkeit davon, ob der Anhänger angekuppelt ist oder nicht, beeinflusst. Bei der Masse des Kraftfahrzeugs variiert dagegen lediglich die Höhe der Zuladung, die deutlich geringer als eine Gesamtmasse des Anhängers sein kann. Andererseits stellt die Masse des Kraftfahrzeugs ein Maß für den zu überwindenden Fahrwiderstand dar, das bei jeder Nutzung des Kraftfahrzeugs von Bedeutung ist, während ein Anhänger bei der Mehrzahl an Fahrten von Kraftfahrzeugen nicht angehängt ist. Eine besonders exakte Variation des Mindestgrenzwerts des abgebbaren Drehmoments, ab dem ein Fahrbetrieb des Kraftfahrzeugs zugelassen werden kann, kann folglich dadurch erreicht werden, wenn einerseits als Maß für den zu überwindenden Fahrwiderstand ein Vorhandensein oder ein Fehlen eines an das Kraftfahrzeug angekoppelten Anhängers und zusätzlich auch eine Masse des Kraftfahrzeugs und/oder des Anhängers genutzt wird.

Bei der Masse des Kraftfahrzeugs kann es sich insbesondere um eine tatsächliche Masse handeln, die vorzugsweise automatisch, d.h. durch eine in das Kraftfahrzeug selbst integrierte Messvorrichtung mit automatischer Übertragung der Messwerte an die Motorsteuerung, ermittelt werden kann. Dadurch kann eine möglichst sichere und genaue Variation des Mindestgrenzwert des abgebbaren Drehmoments realisiert werden. Die Masse des Kraftfahrzeugs stellt dabei die Summe einer Leermasse des Kraftfahrzeugs und einer Zuladung dar. Die Leermasse des Kraftfahrzeugs kann bekannt und im Wesentlichen unveränderlich sein, so dass für eine Ermittlung der Masse des Kraftfahrzeugs eine Ermittlung der Zuladung ausreichend sein kann, die dann mit der Leermasse summiert wird.

Für eine automatische Ermittlung der Masse des Kraftfahrzeugs beziehungsweise einer Zuladung des Kraftfahrzeugs können vorzugsweise ein Sensor oder mehrere Sensoren genutzt werden. Dies kann vorzugsweise ein Sitzplatzbelegungssensor, vorzugsweise jeweils ein Sitzplatzbelegungssensor je verfügbarem Sitzplatz des Kraftahrzeugs, sein, wodurch automatisch zumindest eine Belegung eines Sitzplatzes mit einer Person oder einem zumindest relativ schweren Gegenstand ermittelt werden kann. Ein solcher Sitzplatzbelegungssensor kann direkt ermittelnd ausgeführt sein, insbesondere indem dieser einen Druck, der von einer Person oder einem auf dem Sitzplatz abgelegten Gegenstand auf den Sitzplatz ausgeübt wird, ermittelt. Ein solcher Sitzplatzbelegungssensor kann vorzugsweise auch so ausgestaltet sein, dass dieser die Masse der Person oder des Gegenstands auf dem Sitzplatz quantitativ ermittelt. Ein Sitzplatzbelegungssensor kann auch indirekt ermittelnd ausgeführt sein, beispielsweise indem dieser ein verriegeltes Schloss eines Sicherheitsgurtes, der einem Sitzplatz zugeordnet ist, dahingehend auswertet, dass der Sitzplatz mit einer Person belegt ist. Für die Person kann dann eine Referenzmasse angenommen werden

Als Sensor, der für eine automatische Ermittlung der Masse des Kraftfahrzeugs und/oder der Masse des Anhängers genutzt werden kann, kann weiterhin ein Reifendrucksensor, vorzugsweise ein Reifendrucksensor je vorhandenem Reifen des Kraftfahrzeugs oder des Anhängers vorgesehen sein. Aus einer Änderung eines Reifendrucks (Luftdruck in dem Reifen), insbesondere während eines Stillstands des Kraftfahrzeugs oder des Anhängers, kann auf eine Änderung der Masse des Kraftfahrzeugs oder des Anhängers infolge einer erhöhten oder verringerten Zuladung geschlossen werden.

Auch die variierende Menge des in einem Kraftstofftank des Kraftfahrzeugs gelagerten Kraftstoffs kann sich in einem relevanten Maße ändernd auf die Masse des Kraftfahrzeugs auswirken. Eine aktuell vorhandene Menge des Kraftstoffs kann mittels eines Füllstandsensors des Kraftstofftanks, wie er üblicherweise bei einem Kraftfahrzeug verbaut ist, ermittelt und dieses Ergebnis für die Ermittlung der Masse des Kraftfahrzeugs berücksichtigt werden.

Eine Änderung einer Zuladung und damit der Masse des Kraftfahrzeugs kann auch mittels eines Neigungssensors ermittelt werden, der in einer bevorzugten Ausgestaltung als Beschleunigungssensor grundsätzlich beliebige Bewegungen der Karosserie des Kraftfahrzeugs ermitteln kann. Infolge einer gefederten Aufhängung der Räder an einer Karosserie des Kraftfahrzeugs kann eine sich ändernde Zuladung des Kraftfahrzeugs zu einer entsprechenden Bewegung der Karosserie führen, was mittels des mindestens einen Neigungssensors ermittelt und darauf basierend auf die Zuladung und damit die Masse des Kraftfahrzeugs geschlossen werden kann.

Weiterhin kann zur Ermittlung der Masse des Kraftfahrzeugs und/oder des Anhängers mindestens ein Wegsensors genutzt werden, der einen Abstand einer Komponente des Kraftfahrzeugs oder des Anhängers zu dem Untergrund (auf dem das Kraftfahrzeug oder der Anhänger steht) misst. Ein solcher Wegsensor kann den Abstand direkt mittels beispielsweise eines Lasers messen. Möglichst ist auch eine Messung, die darauf beruht, das Ausmaß einer Einfederung einer gefederten Aufhängung mindestens eines Rads zu ermitteln. Dies kann bei einem Kraftfahrzeug insbesondere an einer Hinterachse davon vorteilhaft sein. Vorzugsweise kann eine Abstandsmessung mittels geeigneter Sensoren an mehreren Stellen des Kraftfahrzeugs oder des Anhängers, beispielsweise im Bereich jedes Rads erfolgen, woraus eine möglichst genaue Ermittlung der Masse resultieren kann.

Dies gilt auch für einen Wiegesensor, der ebenfalls zur Ermittlung der Masse beziehungsweise einer Zuladung des Kraftfahrzeugs und/oder Anhängers genutzt werden kann und der vorzugsweise auf einer Messung einer Verformung mittels beispielsweise eines Dehnungsmessstreifens oder auf dem Prinzip einer elektromagnetischen Kraftkompensation beruhen kann. Auch ein solcher Wiegesensor kann vorzugsweise jeweils im Bereich jedes Rads des Kraftfahrzeugs oder des Anhängers vorgesehen sein.

Eine Zuladung und damit die Masse des Kraftfahrzeugs kann weiterhin mittels einer Kamera oder mehrerer Kameras ermittelt werden, indem ein Bild der Kamera(s) hinsichtlich des Vorhandenseins von Personen und/oder Gegenständen und einer daraus resultierenden (geschätzten) Zuladung ausgewertet wird.

Eine automatische Ermittlung der Masse des Kraftfahrzeugs kann mit einem nicht unerheblichen konstruktiven Aufwand verbunden sein, so dass auch vorgesehen sein kann, dass die Masse des Kraftfahrzeugs von dem Fahrer an einer Bedieneinheit des Kraftfahrzeugs angegeben wird. Um zu vermeiden, dass der Fahrer eine entsprechende Eingabe versehentlich nicht macht, kann insbesondere auch vorgesehen sein, dass von der Motorsteuerung eine entsprechende Abfrage an der Bedieneinheit gestellt wird. Wird eine solche Anfrage nicht beantwortet, kann insbesondere vorgesehen sein, dass ein Fahrbetrieb des Kraftfahrzeugs nicht freigegeben wird. Eine Eingabe beziehungsweise Abfrage der Masse des Kraftfahrzeugs kann insbesondere indirekt erfolgen, so dass sich eine Eingabe beziehungsweise Abfrage nicht direkt auf die Masse, sondern auf einen die Masse direkt beeinflussenden Zustand des Kraftfahrzeugs, insbesondere eine Besetzung mit einer gewissen Anzahl an mittels des Kraftfahrzeugs zu befördernden Personen und/oder auf eine qualitativ oder quantitativ beurteilte Nutzung eines Kofferraums des Kraftfahrzeugs, beziehen kann. Um insbesondere bei einer solchen Abfrage eine Eingabe zu vereinfachen, kann vorzugsweise vorgesehen sein, dass für die Masse des Kraftfahrzeugs mehrere Massebereiche vordefiniert sind (z.B. Besetzung mit bis zu zwei Personen ohne Gepäck, bis zu fünf Personen ohne Gepäck, bis zur maximalen Zuladung).

Bei der Masse des Anhängers kann es sich ebenfalls vorteilhaft um eine tatsächliche Masse handeln, weil dadurch am genauesten der Mindestgrenzwert des abgebbaren Drehmoments, ab dem eine Freigabe des Fahrbetriebs erfolgt, eingestellt werden kann. Dies bedingt jedoch eine tatsächliche, vorzugsweise automatische (d.h. durch eine in das Kraftfahrzeug und/oder in den Anhänger integrierte Messvorrichtung mit automatischer Übertragung der Messwerte an die Motorsteuerung) Messung der Masse des Anhängers, was mit einem relativ hohen Aufwand verbunden ist. Daher kann es vorteilhaft sein, wenn als Maß für den zu überwindenden Fahrwiderstand eine vordefinierte zulässige Masse des Anhängers (einschließlich Beladung) genutzt wird, wobei eine zulässige Masse des Anhängers nicht zwingend eine Limitierung des Anhängers selbst sein muss, sondern auch eine zulässige Anhängemasse, d.h. eine zulässige Masse, die ein an das Kraftfahrzeug angekoppelter Anhänger seitens des Kraftfahrzeugs aufweisen darf, sein kann.

Da eine automatische Ermittlung der Masse des Anhängers besonders aufwändig sein kann, kann vorzugsweise vorgesehen sein, dass die Masse des Anhängers von dem Fahrer an einer Bedieneinheit des Kraftfahrzeugs angegeben wird. Um zu vermeiden, dass der Fahrer eine entsprechende Eingabe versehentlich nicht macht, kann insbesondere auch vorgesehen sein, dass von der Motorsteuerung eine entsprechende Abfrage an der Bedieneinheit gestellt wird. Um bei einer solchen Abfrage eine Eingabe zu vereinfachen, kann vorzugsweise vorgesehen sein, dass für die Masse des Anhängers mehrere Massebereiche vordefiniert sind.

Als ein Maß für den zu überwindenden Fahrwiderstand kann weiterhin vorteilhaft ein Formfaktor, insbesondere die Stirnfläche (A) und/oder der Strömungswiderstandskoeffizient (c_{W}), besonders bevorzugt das Produkt aus der Stirnfläche und dem Strömungswiderstandskoeffizienten des Kraftfahrzeugs und/oder des Anhängers genutzt werden, weil auch ein solcher Formfaktor in einem erheblichen Maße den zu überwindenden Fahrwiderstand beeinflussen kann und damit hinsichtlich des Mindestgrenzwerts des abgebbaren Drehmoments berücksichtigt werden sollte.

Ein Ausgangsformfaktor des Kraftfahrzeugs (im unbeladenen und auch sonst gegenüber einer Zertifizierung unveränderten Zustand) kann bekannt sein, so dass es ausreichend sein kann, diesbezüglich lediglich eine Änderung zu berücksichtigen. Eine solche Änderung kann sich aus einer Zuladung des Kraftfahrzeugs ergeben, weil eine solche zu einem Einfedern der gefederten Aufhängungen der Räder und insbesondere einem ungleichmäßigen Einfedern dieser Aufhängungen (insbesondere stärker an einer Hinterachse als an einer Vorderachse) führen kann, was sich negativ auf den Formfaktor und damit den zu überwindenden Fahrwiderstand auswirken kann. Diejenigen Sensoren, die für eine Ermittlung einer sich ändernden Zuladung des Kraftfahrzeugs nutzbar sind, können daher auch für eine Änderung des Formfaktors des Kraftfahrzeugs genutzt werden. Dies gilt insbesondere, wenn diese derart ausgestaltet und eingerichtet sind, dass aus deren Signalen eine ungleichmäßige Verteilung der Zuladung und daraus resultierend ein ungleichmäßiges Einfedern der Aufhängungen der Räder hergeleitet werden kann.

Da eine automatische Ermittlung des Formfaktors des Anhängers aufwändig sein kann, kann vorzugsweise vorgesehen sein, dass der Formfaktor des Anhängers von dem Fahrer an einer Bedieneinheit des Kraftfahrzeugs angegeben wird. Auch hierzu kann von der Motorsteuerung eine entsprechende Abfrage an der Bedieneinheit gestellt werden. Um bei einer solchen Abfrage eine Eingabe zu vereinfachen, kann vorzugsweise vorgesehen sein, dass für den Formfaktor des Anhängers mehrere Formfaktorbereiche vordefiniert sind.

Als ein Maß für den zu überwindenden Fahrwiderstand kann weiterhin vorteilhaft eine Art des Anhängers genutzt werden, wobei insbesondere zwischen einerseits Lastenträgern, die ausschließlich an der Anhängekupplung des Kraftfahrzeugs abgestützt sind und keine Räder aufweisen, und andererseits als Fahrzeuge ausgestalteten Anhängern unterschieden werden kann.

Als ein Maß für den zu überwindenden Fahrwiderstand, insbesondere als ergänzendes Maß für den zu überwindenden Fahrwiderstand, kann weiterhin mindestens ein Parameter der Umgebungsluft, insbesondere die Lufttemperatur und/oder der Luftdruck und/oder die Luftfeuchtigkeit berücksichtigt werden, weil sich diese insbesondere auf den Strömungswiderstand als ein Teil des Fahrwiderstands auswirken können. Insbesondere kann eine höhere Dichte der Umgebungsluft ein höheres abgebares Drehmoment erfordern, um ein vorbestimmtes Beschleunigungsvermögen des Kraftfahrzeugs zu gewährleisten.

Bei einer Abfrage seitens der Motorsteuerung bezüglich der Masse des Kraftfahrzeugs und/oder der Art des Anhängers und/oder der Masse des Anhängers und/oder des Formfaktors des Anhängers kann diese grundsätzlich derart ausgeführt sein, dass diese zwingend eine Eingabe erfordert, um einen Fahrbetrieb des Kraftfahrzeugs, gegebenenfalls sogar einen (Kalt-)Start der Brennkraftmaschine zu ermöglichen.

Vorzugsweise kann vorgesehen sein, dass eine Eingabe an der Bedieneinheit von der Motorsteuerung während des Fahrbetriebs überprüft wird. Hierzu können beispielsweise Informationen bezüglich einer Ausrichtung des Kraftfahrzeugs zur Horizontalen, bezüglich einer erzeugten Antriebsleistung der Brennkraftmaschine und/oder bezüglich einer Beschleunigung des Kraftfahrzeugs ausgewertet werden. Solche Informationen können von entsprechenden Sensoren des Kraftfahrzeugs bereitgestellt werden. Bei einer fehlenden Übereinstimmung des Prüfergebnisses mit der Eingabe kann vorgesehen sein, dass das gewählte Maß für den zu überwindenden Fahrwiderstand von der Motorsteuerung geändert wird. Ergänzend oder alternativ kann vorgesehen sein, dass ein weitergehender Fahrbetrieb von der Motorsteuerung (in einer das Fahrverhalten des Kraftfahrzeugs und/oder das Fahrerlebnis für den Fahrer beeinträchtigenden Art und Weise) behindert wird. Dabei kann auch vorgesehen sein, dass ein weitergehender Fahrbetrieb von der Motorsteuerung verhindert wird, beispielsweise durch ein durch Warnhinweise begleitetes Reduzieren der Antriebsleistung des Verbrennungsmotors bis zu einem Leerlaufbetrieb und ggf. bis zu einem Ausschalten des Verbrennungsmotors. Weiterhin ergänzend oder alternativ kann vorgesehen sein, dass ein Warnhinweis bezüglich der fehlenden Übereinstimmung des Prüfergebnisses mit der Eingabe auf einer Anzeige angezeigt wird und/oder von der Motorsteuerung eine erneute Abfrage durchgeführt wird. Auch kann ein Fehlereintrag bezüglich der fehlenden Übereinstimmung des Prüfergebnisses mit der Eingabe in der Motorsteuerung gespeichert werden.

Sofern das gewählte Maß für den zu überwindenden Fahrwiderstand von der Motorsteuerung aufgrund der Überprüfung geändert wird, kann vorgesehen sein, dass das geänderte Maß für einen darauffolgenden Kaltstart oder nach einem darauffolgenden Kaltstart beibehalten wird, sofern ein Vorhandensein desselben Anhängers festgestellt wird. Dadurch kann eine erneute Falscheingabe vermieden werden. Dasselbe kann für den gegebenenfalls angezeigten Warnhinweis gelten, der dann erneut angezeigt werden kann.

Ein Vorhandensein desselben Anhängers kann vorzugsweise dadurch festgestellt werden, das der Belegungszustand des Steckverbinders des Kraftfahrzeugs, der Teil der elektrischen Leistungsversorgung für den Anhänger ist, nicht geändert wurde oder innerhalb eines Zeitraums, der kleiner als ein Grenzwert (z.B. drei Minuten) ist, zweifach geändert wurde.

Es kann auch vorgesehen sein, dass bei einer mehrfachen Feststellung einer fehlenden Übereinstimmung des Prüfergebnisses mit der Eingabe eine Auswahlmöglichkeit bei der Abfrage eingeschränkt oder eine solche nicht mehr durchgeführt wird. Insbesondere kann dann stets ein Maß für den zu überwindenden Fahrwiderstand gewählt werden, der zu einem relativ großen, insbesondere einem größten definierten Mindestgrenzwert führt.

Die erfindungsgemäß berücksichtigte Temperatur der Abgasnachbehandlungsvorrichtung kann grundsätzlich eine beliebige Temperatur sein, die der Abgasnachbehandlungsvorrichtung zugeordnet wird. Diese kann vorzugsweise gemessen werden, was jedoch hinsichtlich einer direkten Messung einer (Körper-)Temperatur der Abgasnachbehandlungsvorrichtung mit einem relativ hohen konstruktiven Aufwand verbunden sein kann. Besonders bevorzugt kann die Temperatur der Abgasnachbehandlungsvorrichtung daher modelliert beziehungsweise mittels eines Modells rechnerisch bestimmt werden. Dies kann insbesondere ausgehend von der Umgebungstemperatur zum Zeitpunkt des Kaltstarts und einer erwarteten Erwärmung seit dem Kaltstart durch das Abgas und durch gegebenenfalls vorgesehene Zusatzmaßnahmen, wie beispielsweise eine aktive Erwärmung mittels einer elektrischen Heizvorrichtung oder eines Brenners, durchgeführt werden.

Ein erfindungsgemäß betriebenes Kraftfahrzeug kann insbesondere ein radbasiertes und nicht schienengebundenes Kraftfahrzeug (vorzugsweise ein PKW oder ein LKW) sein.

Ein erfindungsgemäß betriebenes Kraftfahrzeug kann auch einen teilelektrifizierten Antriebsstrang aufweisen, so dass neben der Brennkraftmaschine auch mindestens ein elektrischer Traktionsmotor vorgesehen ist, durch den Fahrantriebsleistung für das Kraftfahrzeug bereitgestellt werden kann (Ausgestaltung des Kraftfahrzeugs als Hybridfahrzeug). Dabei kann die Auslegung des Antriebsstrangs derart vorgesehen sein, dass mittels des elektrischen Traktionsmotors Fahrantriebsleistung lediglich unterstützend während eines Betriebs der Brennkraftmaschine bereitgestellt werden kann. Weiterhin kann eine Auslegung des Antriebsstrangs derart vorgesehen sein, dass mittels des elektrischen Traktionsmotors temporär die Fahrantriebsleistung vollständig beziehungsweise ausschließlich bereitgestellt werden kann.

Bei dem Verbrennungsmotor eines erfindungsgemäß betriebenen Kraftfahrzeugs kann es sich um einen (selbstzündenden und qualitätsgeregelten) Dieselmotor oder um einen (fremdgezündeten und quantitätsgeregelten) Ottomotor oder um eine Kombination daraus, d.h. z.B. einen Verbrennungsmotor mit homogener Kompressionszündung, handeln. Der Verbrennungsmotor kann dabei sowohl mit Flüssigkraftstoff (d.h. Diesel oder Benzin) als auch mit einem gasförmigen Kraftstoff (insbesondere Erdgas, LNG oder LPG) betrieben werden.

Die Erfindung wird nachfolgend anhand von in den Zeichnungen dargestellten Ausführungsbeispielen näher erläutert. In den Zeichnungen zeigt, teilweise in vereinfachter Darstellung:
- Fig. 1:: ein erfindungsgemäß betreibbares Kraftfahrzeug mit einem Anhänger;
- Fig. 2:: eine Brennkraftmaschine des Kraftfahrzeugs;
- Fig. 3:: den zeitlichen Verlauf des von einem Verbrennungsmotor der Brennkraftmaschine abgebbaren Drehmoments für einen Betrieb des Kraftfahrzeugs ohne den Anhänger;
- Fig. 4:: den zeitlichen Verlauf des von einem Verbrennungsmotor der Brennkraftmaschine abgebbaren Drehmoments für einen Betrieb des Kraftfahrzeugs mit dem Anhänger und
- Fig. 5:: den Ablauf einer Ermittlung eines Mindestgrenzwerts M_{G} des abgebbaren Drehmoments M in Abhängigkeit von der Masse des Kraftfahrzeugs 1 und darauf basierend eines Zeitraums Δt₁, innerhalb dessen ein Fahrbetrieb des Kraftfahrzeugs 1 verhindert ist.

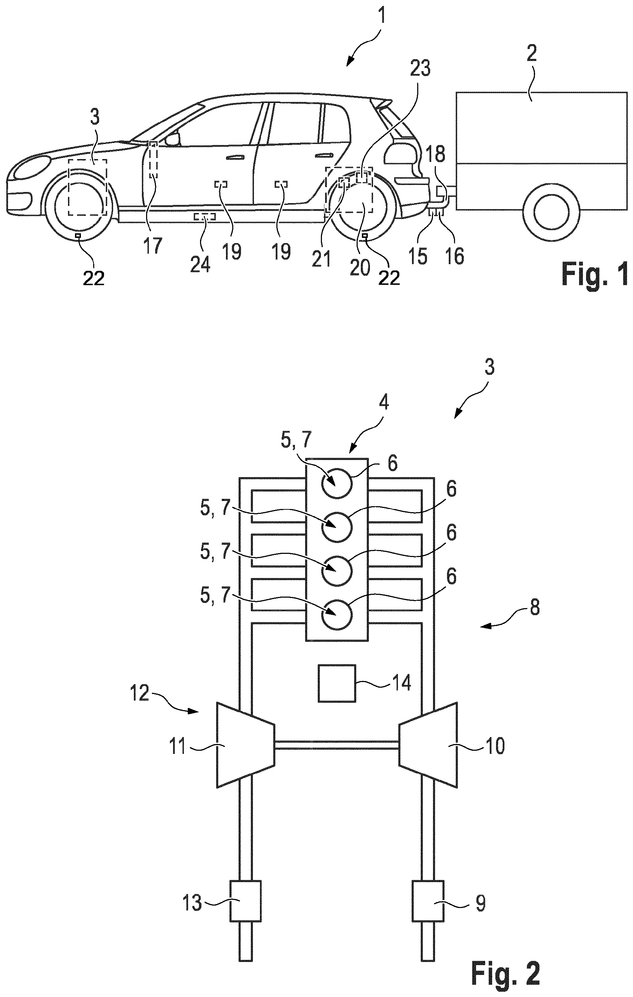

Die Fig. 1 zeigt ein Kraftfahrzeug 1, das für einen erfindungsgemäßen Betrieb ausgelegt ist, mit einem Anhänger 2. Der Anhänger 2 ist als Fahrzeug mit mindestens einer Achse ausgestaltet.

Das Kraftfahrzeug umfasst eine Brennkraftmaschine 3.

Die Brennkraftmaschine 3 umfasst gemäß der Fig. 2 einen Verbrennungsmotor 4, der beispielhaft in Form eines Hubkolbenmotors mit vier in Reihe angeordneten Zylinderöffnungen 5 ausgebildet ist. Die Zylinderöffnungen 5 begrenzen mit darin geführten Hubkolben 6 und einem Zylinderkopf (nicht gezeigt) jeweils einen Brennraum 7. Den Brennräumen 7 wird im Betrieb des Verbrennungsmotors 4 Frischgas über einen Frischgasstrang 8 zugeführt. Bei dem Frischgas handelt es sich zumindest hauptsächlich um Luft, die aus der Umgebung angesaugt wird und die anschließend über einen Luftfilter 9 und dann über einen Frischgasverdichter 10 geführt wird. Dieser Frischgasverdichter 10 ist Teil eines Abgasturboladers, der weiterhin eine Abgasturbine 11 umfasst, die in einen Abgasstrang 12 der Brennkraftmaschine 1 integriert ist. Abgas, das bei der Verbrennung von Gemischmengen, die aus dem Frischgas sowie aus beispielsweise direkt über Kraftstoffinjektoren (nicht dargestellt) in die Brennräume 7 eingespritztem Kraftstoff bestehen, entstanden ist, wird über den Abgasstrang 12 abgeführt und dabei durch mindestens eine Abgasnachbehandlungsvorrichtung 13 geführt.

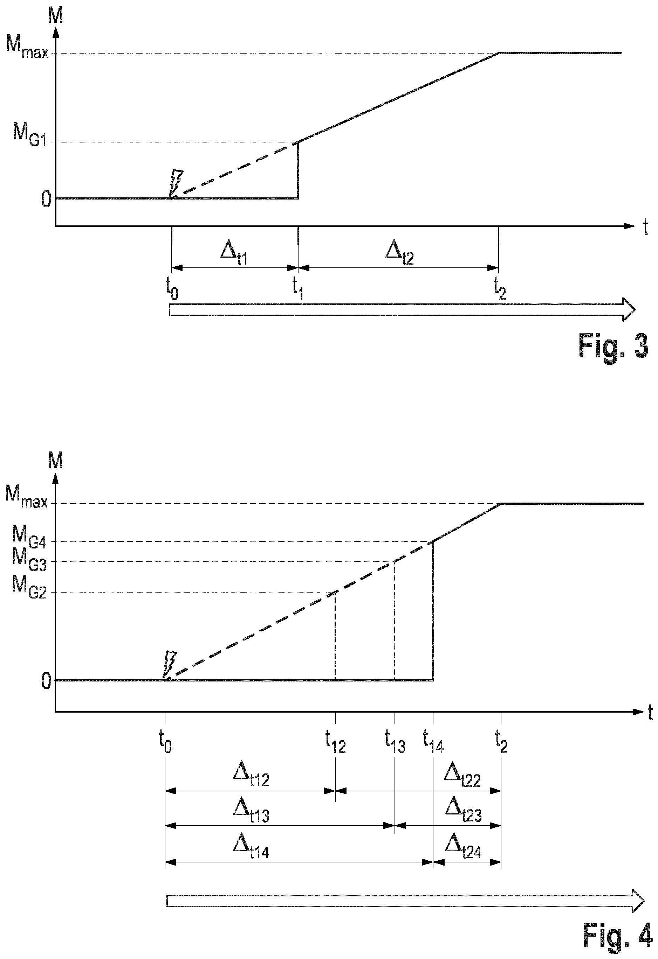

Für eine weitestgehende Wirksamkeit bezüglich der vorgesehenen Abgasnachbehandlung in allen Betriebszuständen des Verbrennungsmotors 4 muss die Abgasnachbehandlungsvorrichtung 13 eine Temperatur aufweisen, die mindestens einer definierten Anspringtemperatur entspricht. Liegt die Temperatur der Abgasnachbehandlungsvorrichtung 13 während eines Aufwärmbetriebs der Brennkraftmaschine 3, die sich insbesondere an einen Kaltstart anschließen kann, unterhalb der Anspringtemperatur, kann die Abgasnachbehandlung unzureichend sein. Um zu vermeiden, dass dadurch Schadstoffemissionsgrenzwerte nicht eingehalten werden, ist vorgesehen, dass der Betrieb der Brennkraftmaschine 3 bezüglich des von dem Verbrennungsmotor 4 abgebbaren Drehmoments mittels einer Motorsteuerung 14 in Abhängigkeit von der Temperatur der Abgasnachbehandlungsvorrichtung 13 limitiert wird. Dieses Vorgehen ist in den Fig. 3 und 4 gezeigt.

Die Fig. 3 und 4 zeigen jeweils in einem Diagramm den Verlauf des von dem Verbrennungsmotor 4 abgebbaren Drehmoments M (auf der Vertikalachse) über der Zeit t (auf der Horizontalachse). Dabei ist der Verbrennungsmotor 4 bis zum Zeitpunkt t₀ außer Betrieb. Das von dem Verbrennungsmotor 4 abgebbare Drehmoment beträgt daher null. Zum Zeitpunkt t₀ wird der Verbrennungsmotor 4 in Betrieb genommen (Kaltstart). Während eines Aufwärmbetriebs, der sich vom Zeitpunkt t₀ bis zum Zeitpunkt t₂ erstreckt, wird das von dem Verbrennungsmotor 4 abgebbare Drehmoment M mittels der Motorsteuerung 14 limitiert. Dabei zeigen die Fig. 3 und 4 grundsätzlich - und für einen Fahrbetrieb ab einem Zeitpunkt t₁ auch tatsächlich - eine lineare Abnahme der Limitierung beziehungsweise eine lineare Zunahme des abgebbaren Drehmoments M über der Zeit t. Es kann jedoch auch eine anders verlaufende Limitierung vorgesehen sein. Der Zeitpunkt t₂ ist dadurch definiert, dass die Temperatur der Abgasnachbehandlungsvorrichtung 13 ihre Anspringtemperatur erreicht hat. Dadurch endet eine von der Motorsteuerung 14 limitierte Drehmomentabgabe, d.h. der Verbrennungsmotor 4 kann bedarfsweise mit einer konstruktiv vorgesehenen maximalen Drehmomentabgabe betrieben werden (Normalbetrieb).

Für einen Fahrbetrieb des Kraftfahrzeugs 1 ist ein Mindestgrenzwert M_{G} des abgebbaren Drehmoments M erforderlich, um ein ausreichendes Fahrbetriebsverhalten des Kraftfahrzeugs 1, insbesondere hinsichtlich eines minimalen Beschleunigungsvermögens, zu gewährleisten. Daher ist vorgesehen, dass ein Fahrbetrieb des Kraftfahrzeugs 1 verhindert wird, bis die Temperatur der Abgasnachbehandlungsvorrichtung 13 so hoch ist, dass dem limitierten Verlauf des abgebbaren Drehmoments M entsprechend der Mindestgrenzwert M_{G} erreicht ist. Dies ist in dem dargestellten Ausführungsbeispiel dadurch realisiert, dass die Limitierung bezüglich des abgebbaren Drehmoments M von der Motorsteuerung 14 so lange bei null gehalten wird, bis der grundsätzlich ab dem Zeitpunkt t₀ linear ansteigende Verlauf des abgebbaren Drehmoments M zum Zeitpunkt t₁ den Mindestgrenzwert M_{G} erreicht hat. In dem Zeitraum Δt₁, der sich von dem Zeitpunkt t₀ bis t₁ erstreckt, wird der Verbrennungsmotor 4 demnach zwangsweise mittels der Motorsteuerung 14 und folglich unabhängig von einer anderen Leistungsanforderung, die ein Fahrer des Kraftfahrzeugs 1 möglicherweise mittels beispielsweise eines Fahrpedals anfordert, im Leerlauf betrieben, so dass das abgebbare Drehmoment M weiterhin null beträgt und ein Fahrbetrieb des Kraftfahrzeugs 1 nicht möglich ist. Dabei kann die Motorsteuerung 14 insbesondere auch ein Einkuppeln des Verbrennungsmotors 4 in einen Antriebsstrang des Kraftfahrzeugs 1 verhindern. Erst zum Zeitpunkt t₁ gibt die Motorsteuerung 14 einen Fahrbetrieb des Kraftfahrzeugs 1 frei, weil das dann abgebbare Drehmoment M den Mindestgrenzwert M_{G} erreicht hat. In dem sich anschließenden Zeitraum Δt₂, der sich von dem Zeitpunkt t₁ bis zum Zeitpunkt t₂ erstreckt, ist dann zwar ein Fahrbetrieb des Kraftfahrzeugs 1 möglich, das abgebbare Drehmoment M ist dabei jedoch im Vergleich zu der konstruktiv vorgesehenen maximal möglichen Drehmomentabgabe Mₘₐₓ limitiert.

Erfindungsgemäß ist vorgesehen, dass der Mindestgrenzwert M_{G} in Abhängigkeit davon variiert wird, welcher Fahrwiderstand für das Kraftfahrzeug 1 durch die von dem Verbrennungsmotor 4 erzeugte Antriebsleistung potentiell beziehungsweise erwartungsgemäß überwunden werden muss.

Hierfür können als Maß für den zu überwindenden Fahrwiderstand das Vorhandensein oder das Fehlen des an das Kraftfahrzeug 1 angekoppelten Anhängers 2 sowie, bei einem Vorhandensein des Anhängers 2, die Art des Anhängers 2 und gegebenenfalls ein konkreter Massebereich des Anhängers 2 berücksichtigt werden. Die Fig. 3 zeigt dann die Limitierung bezüglich des abgebbaren Drehmoments M für einen Betrieb des Kraftfahrzeugs 1 ohne den Anhänger 2 oder mit dem Anhänger 2, sofern dieser - anders als in der Fig. 1 gezeigt - lediglich ein von einer Anhängekupplung 18 getragener Lastenträger, wie beispielsweise ein Fahrradträger ist, Da der zu überwindende Fahrwiderstand in diesen Fällen relativ gering sein wird, liegt der Mindestgrenzwert M_{G1} für das abgebbare Drehmoment M, ab dem ein Fahrbetrieb des Kraftfahrzeugs 1 zugelassen wird, relativ niedrig. Die Fig. 4 zeigt dagegen beispielhafte Limitierungen bezüglich des abgebbaren Drehmoments M für einen Betrieb des Kraftfahrzeugs 1 mit dem oder grundsätzlich mit einem Anhänger 2, der als Fahrzeug mit mindestens einer Achse ausgestaltet ist (vgl. Fig. 1), wobei beispielhaft drei unterschiedliche Mindestgrenzwerte M_{G2}, M_{G3}, M_{G4} für das abgebbare Drehmoment M, ab dem ein Fahrbetrieb des Kraftfahrzeugs 1 zugelassen wird, definiert sind. Diese Mindestgrenzwerte M_{G2}, M_{G3}, M_{G4} unterscheiden sich dabei von demjenigen gemäß der Fig. 3, d.h. von dem Mindestgrenzwert M_{G1}, der für einen Betrieb des Kraftfahrzeugs 1 ohne Anhänger 2 oder mit als Lastenträger ausgestaltetem Anhänger 2 vorgesehen ist. Dabei sind die Mindestgrenzwerte M_{G2}, M_{G3}, M_{G4} jeweils größer als der Mindestgrenzwert M_{G1}. Eine Auswahl eines der drei Mindestgrenzwerte M_{G2}, M_{G3}, M_{G4}, der für einen Betrieb des Kraftfahrzeugs 1 mit einem konkreten Anhänger 2 gelten soll, erfolgt in Abhängigkeit von der maximal zulässigen Masse des Anhängers 2. Dabei liegt der ausgewählte Mindestgrenzwert M_{G2}, M_{G3}, M_{G4} umso niedriger, je kleiner die Masse des Anhängers 2 ist. Der kleinste Mindestgrenzwert M_{G2} kann beispielsweise für eine Masse des Anhängers 2 bis zu 200 kg, der mittlere Mindestgrenzwert M_{G3} für eine Masse des Anhängers 2 bis zu 1000 kg und der größte Mindestgrenzwert M_{G4} für eine Masse des Anhängers 2, die höchstens der maximal für das Kraftfahrzeug 1 zugelassenen Anhängelast (z.B. 1800 kg) entspricht, vorgesehen sein. Je kleiner der Mindestgrenzwert M_{G2}, M_{G3}, M_{G4} ist, desto kürzer ist auch der Zeitraum Δt₁, innerhalb dessen ein Fahrbetrieb des Kraftfahrzeugs 1 mittels der Motorsteuerung 14 verhindert ist (Δt₁₂, Δt₁₃, Δt₁₄).

Während eine Ermittlung bezüglich des Vorhandenseins oder des Fehlens des Anhängers 2 automatisch mittels der Motorsteuerung 14 erfolgt, indem der Belegungszustand eines Steckverbinders 15 des Kraftfahrzeugs 1, der Teil einer elektrischen Leistungsversorgung für den Anhängers 2 ist und an den ein Gegensteckverbinder 16 des Anhängers 2 anschließbar ist, kann eine Auswahl der Art des Anhängers 2 (Lastenträger oder als Fahrzeug ausgestalteter Anhänger 2) sowie, bei einem als Fahrzeug ausgestalteten Anhänger 2, des konkreten Massebereichs des Anhängers 2 vorzugsweise durch den Fahrer des Kraftfahrzeugs 1 erfolgen, wozu eine entsprechende Abfrage auf einer Bedieneinheit 17, beispielsweise einem berührungsempfindlichen Display, in dem Innenraum des Kraftfahrzeugs 1 erscheinen kann. Dabei kann auch die Fahrzeug-Identifikationsnummer (FIN) des Anhängers 2 abgefragt werden, wobei eine diesbezügliche Eingabe durch Informationen aus einer Datenbank mit dem dazugehörigen Massebereich ergänzt werden kann. Eine solche Datenbank kann lokal in der Motorsteuerung oder extern gespeichert sein. Bei einer externen Speicherung kann vorzugsweise eine Abfrage über Telekommunikationsdaten (Online-Abfrage) erfolgen.

Die Abfrage kann bereits vor der Inbetriebnahme des Verbrennungsmotors 4 erfolgen. Die Inbetriebnahme des Verbrennungsmotors 4 kann durch den Fahrer durch beispielsweise das Drücken eines Startknopfs (nicht dargestellt) bewirkt werden. Von einer erwarteten kurzfristigen Inbetriebnahme des Verbrennungsmotors 4 kann seitens der Motorsteuerung 14 beispielsweise dann ausgegangen werden, wenn zuvor eine Fahrertür des Kraftfahrzeugs 1 geöffnet und wieder geschlossen wurde. Auch eine Sitzbelegung eines Fahrersitzes des Kraftfahrzeugs 1 kann dabei berücksichtigt werden. Eine Abfrage hinsichtlich des Massebereichs des Anhängers 2 kann auch erst nach dem Motorstart in dem Zeitraum Δt₁ durchgeführt werden. Dies weist den Vorteil auf, dass zu dem Zeitpunkt, zu dem der Fahrer die entsprechende Auswahl bezüglich des Massebereichs des Anhängers 2 getroffen hat, der Zeitraum Δt₁, innerhalb dessen ein Fahrbetrieb des Kraftfahrzeugs 1 mittels der Motorsteuerung 14 verhindert ist, bereits zumindest teilweise verstrichen sein kann. Eine Beeinträchtigung für den Fahrer hinsichtlich des Betriebs des Kraftfahrzeugs 1 kann dadurch minimiert werden.

Es kann vorgesehen sein, dass mittels der Motorsteuerung 14 während des Fahrbetriebs des Kraftfahrzeugs 1 eine Eingabe des Fahrers, die eine Antwort auf die Abfrage ist, überprüft wird. Hierzu kann beispielsweise ein Signal eines Neigungssensors 24 des Kraftfahrzeugs 1 und/oder eine Beschleunigung des Kraftfahrzeugs 1 und zur Erzielung dieser Beschleunigung aufzubringende Antriebsleistung herangezogen werden. Diese Überprüfung kann beispielsweise innerhalb der ersten zwei oder drei Sekunden des Fahrbetriebs erfolgen. Ergibt eine solche Überprüfung eine fehlende Übereinstimmung des Prüfergebnisses mit der Eingabe, kann von der Motorsteuerung 14 ein weitergehender Fahrbetrieb verhindert werden. Weiterhin kann als Voraussetzung für eine Wiederaufnahme des Fahrbetriebs nach einer temporären Unterbrechung mit einer Außerbetriebnahme der Brennkraftmaschine eine erneute Abfrage durchgeführt werden. Alternativ dazu kann von der Motorsteuerung 14 selbsttätig eine abweichende Antwort auf die ursprüngliche Abfrage eingestellt werden.

Alternativ oder ergänzend kann vorgesehen sein, dass nach einer Beendigung des Fahrbetriebs und bei einer darauffolgenden Nutzung des Kraftfahrzeugs 1 mit demselben Anhänger 2, die einen Kaltstart der Brennkraftmaschine umfasst, ein Warnhinweis bezüglich der fehlenden Übereinstimmung des Prüfergebnisses mit der Eingabe auf einer Anzeige, die insbesondere Teil der Bedieneinheit 17 sein kann, angezeigt wird. Ergänzend dazu kann von der Motorsteuerung 14 eine selbsttätig eingestellte Antwort auf die ursprüngliche Abfrage eingestellt beziehungsweise beibehalten werden.

Ergänzend oder alternativ kann als Maß für den zu überwindenden Fahrwiderstand eine Masse des Kraftfahrzeugs 1 berücksichtigt werden. Die Fig. 3 zeigt dann die Limitierung bezüglich des abgebbaren Drehmoments M für einen Betrieb des lediglich mit einer Person besetzten Kraftfahrzeugs 1. Da der zu überwindende Fahrwiderstand in diesem Fall relativ gering ist, liegt der Mindestgrenzwert M_{G1} für das abgebbare Drehmoment M, ab dem ein Fahrbetrieb des Kraftfahrzeugs 1 zugelassen wird, entsprechend niedrig. Die Fig. 4 zeigt dagegen beispielhafte Limitierungen bezüglich des abgebbaren Drehmoments M für einen Betrieb des Kraftfahrzeugs 1 bei höheren Massen, wobei beispielhaft drei unterschiedliche Mindestgrenzwerte M_{G2}, M_{G3}, M_{G4} für das abgebbare Drehmoment M, ab dem ein Fahrbetrieb des Kraftfahrzeugs 1 zugelassen wird, gezeigt sind. Diese Mindestgrenzwerte M_{G2}, M_{G3}, M_{G4} unterscheiden sich dabei von demjenigen gemäß der Fig. 3, d.h. von dem Mindestgrenzwert M_{G1}, der für einen Betrieb des nur mit einer Person besetzten Kraftfahrzeugs 1 vorgesehen ist. Dabei sind die Mindestgrenzwerte M_{G2}, M_{G3}, M_{G4} jeweils größer als der Mindestgrenzwert M_{G1} und der automatisch von der Motorsteuerung 14 ausgewählte Mindestgrenzwert M_{G2}, M_{G3}, M_{G4} ist umso niedriger, je kleiner die Masse des Kraftfahrzeugs 1 ist. Der größte Mindestgrenzwert M_{G4} kann beispielsweise für eine Masse des Kraftfahrzeugs 1 vorgesehen sein, die dieses aufweist, wenn sämtliche Sitzplätze mit Personen besetzt und zudem ein Laderaum des Kraftfahrzeugs 1 vollständig beladen ist. Bei dem nächstkleineren Mindestgrenzwert M_{G3} sind beispielsweise nur sämtliche Sitzplätze des Kraftfahrzeugs 1 mit Personen belegt, der Laderaum ist dagegen unbeladen. Der Mindestgrenzwert M_{G2} ergibt sich dagegen beispielsweise für eine Masse des Kraftfahrzeugs 1, die vorliegt, wenn das Kraftfahrzeugs 1 mit nur zwei Personen besetzt und der Laderaum unbeladen ist. Je kleiner der Mindestgrenzwert M_{G2}, M_{G3}, M_{G4} ist, desto kürzer ist auch der Zeitraum Δt₁, innerhalb dessen ein Fahrbetrieb des Kraftfahrzeugs 1 mittels der Motorsteuerung 14 verhindert ist (Δt₁₂, Δt₁₃, Δt₁₄).

Eine Ermittlung der Masse des Kraftfahrzeugs 1 erfolgt vorzugsweise automatisch anhand der Auswertung von Signalen mehrerer Sensoren des Kraftfahrzeugs. Gemäß einem Ausführungsbeispiel werden die Signale folgender Sensoren für eine Ermittlung der Masse des Kraftfahrzeugs 1 genutzt: Sitzplatzbelegungssensoren 19, Füllstandssensor 21 eines Kraftstofftanks 20 des Kraftfahrzeugs 1, Reifendrucksensoren 22, Wegsensoren 23 an einer Hinterachse des Kraftfahrzeugs und der Neigungssensor 24 zur Ermittlung einer Neigung der Karosserie des Kraftfahrzeugs 1.

Da die ermittelte Masse des Kraftfahrzeugs 1 grundsätzlich stufenlos variabel ist, ist auch vorgesehen, dass die Motorsteuerung den daraus abgeleiteten Mindestgrenzwert M_{G} stufenlos einstellt. Die in den Fig. 3 und 4 dargestellten Mindestgrenzwerte M_{G1}, M_{G2}, M_{G3}, M_{G4} sind diesbezüglich lediglich diskrete Beispielwerte.

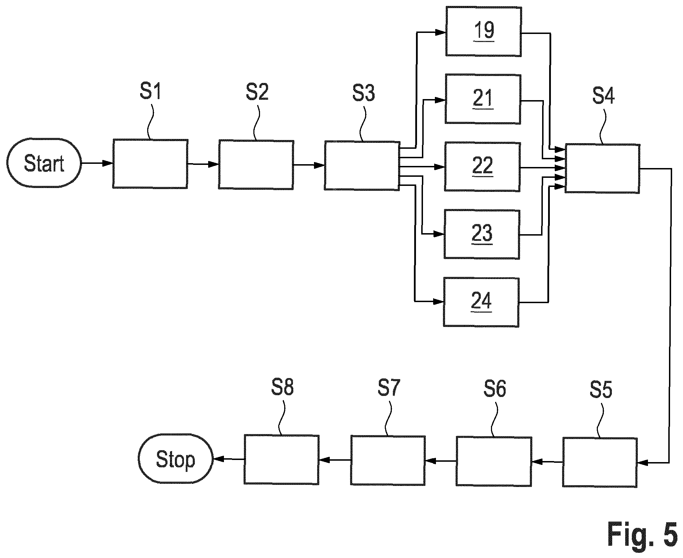

Die Fig. 5 zeigt ergänzend in einem Fließdiagramm den grundsätzlichen Ablauf einer Ermittlung eines Mindestgrenzwerts M_{G} des abgebbaren Drehmoments M in Abhängigkeit von der Masse des Kraftfahrzeugs 1 und darauf basierend eines Zeitraums Δt₁, innerhalb dessen ein Fahrbetrieb des Kraftfahrzeugs 1 verhindert ist. Diese Ermittlung beginnt gemäß dem Schritt S1 mit einer Inbetriebnahme des Verbrennungsmotors 4, woraufhin gemäß Schritt S2 die Ermittlung initialisiert wird. Mit dem dem Schritt S3 erfolgt eine Abfrage von Messwerten der Sitzplatzbelegungssensoren 19, des Füllstandssensor 21, der Reifendrucksensoren 22, der Wegsensoren 23 an der Hinterachse des Kraftfahrzeugs 1 und des Neigungssensors 24. Basierend auf diesen Messwerten wird mit dem Schritt S4 die Masse des Kraftfahrzeugs 1 ermittelt. Zusätzlich dazu erfolgt mit dem Schritt S5 eine Ermittlung von Umweltdaten, wie insbesondere die Lufttemperatur, der Luftdruck und die Luftfeuchtigkeit der umgebenden Luft. Aus der ermittelten Masse und den ermittelten Umweltdaten wird mit dem Schritt S6 der Mindestgrenzwert M_{G} des abgebbaren Drehmoments M ermittelt. Basierend auf diesem Mindestgrenzwert M_{G} des abgebbaren Drehmoments M wird mit dem Schritt S7 der Zeitraum Δt₁, innerhalb dessen ein Fahrbetrieb des Kraftfahrzeugs 1 verhindert ist, ermittelt. Ist dieser Zeitraum Δt₁ abgelaufen, erfolgt mit dem Schritt S8 eine Freigabe des Fahrbetriebs.

### BEZUGSZEICHENLISTE

- 1: Kraftfahrzeug
- 2: Anhänger
- 3: Brennkraftmaschine
- 4: Verbrennungsmotor
- 5: Zylinderöffnung
- 6: Hubkolben
- 7: Brennraum
- 8: Frischgasstrang
- 9: Luftfilter
- 10: Frischgasverdichter
- 11: Abgasturbine
- 12: Abgasstrang
- 13: Abgasnachbehandlungsvorrichtung
- 14: Motorsteuerung
- 15: Steckverbinder
- 16: Gegensteckverbinder
- 17: Bedieneinheit
- 18: Anhängekupplung
- 19: Sitzplatzbelegungssensor
- 20: Kraftstofftank
- 21: Füllstandssensor des Kraftstofftanks
- 22: Reifendrucksensor
- 23: Wegsensor
- 24: Neigungssensor

- M: abgebbares Drehmoment des Verbrennungsmotors
- Mₘₐₓ: maximal abgebbares Drehmoment
- M_{G}: Mindestgrenzwert des abgebbaren Drehmoments für eine Freigabe des Fahrbetriebs
- M_{G1}: Mindestgrenzwert für eine Freigabe des Fahrbetriebs ohne Anhänger / bei nur mit einer Person besetztem Kraftfahrzeug
- M_{G2}: Mindestgrenzwert für eine Freigabe des Fahrbetriebs mit Anhänger mit einer Masse bis zu 200 kg / bei nur mit zwei Personen besetztem Kraftfahrzeug
- M_{G3}: Mindestgrenzwert für eine Freigabe des Fahrbetriebs mit Anhänger mit einer Masse bis zu 1000 kg / bei voll mit Personen besetztem Kraftfahrzeug und leerem Laderaum
- M_{G4}: Mindestgrenzwert für eine Freigabe des Fahrbetriebs mit Anhänger mit einer Masse bis zur maximalen Anhängelast / bei voll besetztem Kraftfahrzeug
- t: Zeit
- t₀: Zeitpunkt einer Inbetriebnahme des Verbrennungsmotors
- t₁: Zeitpunkt einer Freigabe des Fahrbetriebs des Kraftfahrzeugs ohne Anhänger
- t₁₂: Zeitpunkt einer Freigabe des Fahrbetriebs des Kraftfahrzeugs mit einem Anhänger mit einer Masse bis maximal 200 kg
- t₁₃: Zeitpunkt einer Freigabe des Fahrbetriebs des Kraftfahrzeugs mit einem Anhänger mit einer Masse bis maximal 1000 kg
- t₁₄: Zeitpunkt einer Freigabe des Fahrbetriebs des Kraftfahrzeugs mit einem Anhänger mit einer Masse bis zur maximalen Anhängelast
- t₂: Zeitpunkt einer Freigabe des Normalbetriebs
- Δt₁: Zeitraum von t₀ bis t₁
- Δt₁₂,: Zeitraum von t₀ bis t₁₂
- Δt₁₃,: Zeitraum von t₀ bis t₁₃
- Δt₁₄: Zeitraum von t₀ bis t₁₄
- Δt₂: Zeitraum von t₁ bis t₂
- Δt₂₂,: Zeitraum von t₁₂ bis t₂
- Δt₂₃,: Zeitraum von t₁₃ bis t₂
- Δt₂₄: Zeitraum von t₁₄ bis t₂

## Patentansprüche

1. Verfahren zum Betreiben eines Kraftfahrzeugs (1) mit einer Brennkraftmaschine (2), die einen Verbrennungsmotor (4) und einen Abgasstrang (12) mit mindestens einer Abgasnachbehandlungsvorrichtung (13) umfasst, wobei nach einem Kaltstart der Brennkraftmaschine (2), bei dem die Abgasnachbehandlungsvorrichtung (13) eine Temperatur aufweist, die unterhalb einer Anspringtemperatur liegt, ein Betrieb des Verbrennungsmotors (4) mittels einer Motorsteuerung (14) in Abhängigkeit von einer Temperatur der Abgasnachbehandlungsvorrichtung (13) bezüglich des von dem Verbrennungsmotor (4) abgebbaren Drehmoments (M) limitiert wird, wobei ein Fahrbetrieb des Kraftfahrzeugs (1) bis zum Erreichen eines Mindestgrenzwerts (M_{G}) des abgebbaren Drehmoments (M) verhindert wird, **dadurch gekennzeichnet, dass** der Mindestgrenzwert (M_{G}) in Abhängigkeit von einem zu überwindenden Fahrwiderstand des Kraftfahrzeugs (1) variiert wird.

2. Verfahren gemäß Anspruch 1, **dadurch gekennzeichnet, dass** als ein Maß für den zu überwindenden Fahrwiderstand ein Vorhandensein oder ein Fehlen eines an das Kraftfahrzeug (1) angekoppelten Anhängers (2) genutzt wird.

3. Verfahren gemäß Anspruch 2, **dadurch gekennzeichnet, dass** das Vorhandensein oder das Fehlen des Anhängers (2) automatisch von der Motorsteuerung (14) ermittelt wird.

4. Verfahren gemäß Anspruch 3, **dadurch gekennzeichnet, dass** das Vorhandensein oder das Fehlen des Anhängers (2) durch einen Belegungszustand eines Steckverbinders (15) des Kraftfahrzeugs (1), der Teil einer elektrischen Leistungsversorgung für den Anhänger (2) ist, ermittelt wird.

5. Verfahren gemäß einem der vorhergehenden Ansprüche, **dadurch gekennzeichnet, dass** als ein Maß für den zu überwindenden Fahrwiderstand eine Masse und/oder ein Formfaktor des Kraftfahrzeugs (1) und/oder eine Art und/oder eine Masse und/oder ein Formfaktor des Anhängers (2) und/oder mindestens ein Parameter der Umgebungsluft genutzt wird.

6. Verfahren gemäß Anspruch 4 oder 5, **dadurch gekennzeichnet, dass** die Masse des Kraftfahrzeugs (1) und/oder die Masse des Anhängers (2) automatisch von der Motorsteuerung (14) ermittelt wird.

7. Verfahren gemäß Anspruch 5 oder 6, **dadurch gekennzeichnet, dass** für die Ermittlung der Masse des Kraftfahrzeugs (1) und/oder der Masse des Anhängers (2) ein Signal eines oder mehrerer folgender Sensoren ausgewertet wird: Sitzbelegungssensor (19) des Kraftfahrzeugs (1), Reifendrucksensor (22) des Kraftfahrzeugs (1) und/oder des Anhängers (2), Füllstandssensor (21) eines Kraftstofftanks (20) des Kraftfahrzeugs (1), Neigungssensor des Kraftfahrzeugs (1), Wegsensor des Kraftfahrzeugs (1) und/oder des Anhängers (2), der einen Abstand zu einem Untergrund misst, Wiegesensor des Kraftfahrzeugs (1) und/oder des Anhängers (2).

8. Verfahren gemäß einem der Ansprüche 4 bis 7, **dadurch gekennzeichnet, dass**
- das Vorhandensein oder das Fehlen des Anhängers (2) und/oder
- die Masse des Kraftfahrzeugs (1) und/oder
- die Art und/oder die Masse und/oder der Formfaktor des Anhängers (2) von der Motorsteuerung (14) an einer Bedieneinheit (17) des Kraftfahrzeugs (1) abgefragt wird.

9. Verfahren gemäß Anspruch 8, **dadurch gekennzeichnet, dass** eine Eingabe an der Bedieneinheit (17) von der Motorsteuerung (14) während des Fahrbetriebs überprüft wird, wobei bei einer fehlenden Übereinstimmung des Prüfergebnisses mit der Eingabe
- das gewählte Maß für den zu überwindenden Fahrwiderstand von der Motorsteuerung (14) geändert wird und/oder
- ein weitergehender Fahrbetrieb von der Motorsteuerung (14) behindert wird und/oder
- ein Warnhinweis bezüglich der fehlenden Übereinstimmung des Prüfergebnisses mit der Eingabe auf einer Anzeige angezeigt wird und/oder
- eine erneute Abfrage durchgeführt wird und/oder
- ein Fehlereintrag bezüglich der fehlenden Übereinstimmung des Prüfergebnisses mit der Eingabe in der Motorsteuerung (14) gespeichert wird.

10. Verfahren gemäß Anspruch 9, **dadurch gekennzeichnet, dass** für einen oder nach einem darauffolgenden Kaltstart das geänderte Maß für den zu überwindenden Fahrwiderstand beibehalten und/oder der Warnhinweis erneut angezeigt wird, sofern ein Vorhandensein desselben Anhängers (2) festgestellt wird.

11. Verfahren gemäß Anspruch 4 und Anspruch 10, **dadurch gekennzeichnet, dass** ein Vorhandensein desselben Anhängers (2) dadurch festgestellt wird, dass der Belegungszustand des Steckverbinders (15) nicht geändert wurde oder innerhalb eines Zeitraums, der kleiner als ein definierter Grenzwert ist, zweifach geändert wurde.

12. Verfahren gemäß einem der Ansprüche 5 bis 10, **dadurch gekennzeichnet, dass** für die Masse des Kraftfahrzeugs (1) und/oder für die Masse des Anhängers (2) mehrere Massebereiche und/oder für den Formfaktor des Anhängers (2) mehrere Formfaktorbereiche definiert sind.

13. Verfahren gemäß einem der vorhergehenden Ansprüche, **dadurch gekennzeichnet, dass** der Betrieb des Verbrennungsmotors (4) bis zum Erreichen der Anspringtemperatur der Abgasnachbehandlungsvorrichtung (13) limitiert wird.

14. Verfahren gemäß einem der vorhergehenden Ansprüche, **dadurch gekennzeichnet, dass** die Limitierung bezüglich des abgebbaren Drehmoments kontinuierlich mit steigender Temperatur der Abgasnachbehandlungsvorrichtung (13) verringert wird.

15. Motorsteuerung (14) für ein Kraftfahrzeug (1) mit einer Brennkraftmaschine (2), die einen Verbrennungsmotor (4) und einen Abgasstrang (12) mit mindestens einer Abgasnachbehandlungsvorrichtung (13) umfasst,
mit einem Speicher, wobei in dem Speicher ein Computerprogramm hinterlegt ist, das zur Ausführung eines Verfahrens gemäß einem der vorhergehenden Ansprüche ausgebildet ist.

## Claims

1. Method for operating a motor vehicle (1) having an internal combustion engine (2) which comprises a combustion motor (4) and an exhaust gas system (12) having at least one exhaust gas aftertreatment device (13), operation of the combustion motor (4) being limited, after a cold start of the internal combustion engine (2) where the exhaust gas aftertreatment device (13) has a temperature below a light-off temperature, by means of an engine control unit (14) on the basis of a temperature of the exhaust gas aftertreatment device (13) with regard to the torque (M) which can be delivered by the combustion motor (4), driving operation of the motor vehicle (1) being prevented until a minimum limit value (M_{G}) of the deliverable torque (M) is reached, **characterized in that** the minimum limit value (M_{G}) is varied on the basis of a driving resistance of the motor vehicle (1) to be overcome.

2. Method according to claim 1, **characterized in that** the presence or absence of a trailer (2) coupled to the motor vehicle (1) is used as a measure of the driving resistance to be overcome.

3. Method according to claim 2, **characterized in that** the presence or absence of the trailer (2) is automatically determined by the engine control unit (14).

4. Method according to claim 3, **characterized in that** the presence or absence of the trailer (2) is determined by an occupancy state of a plug connector (15) of the motor vehicle (1), which plug connector is part of an electrical power supply for the trailer (2).

5. Method according to any of the preceding claims, **characterized in that** a mass and/or a form factor of the motor vehicle (1) and/or a type and/or a mass and/or a form factor of the trailer (2) and/or at least one parameter relating to the ambient air is used as a measure of the driving resistance to be overcome.

6. Method according to claim 4 or 5, **characterized in that** the mass of the motor vehicle (1) and/or the mass of the trailer (2) is automatically determined by the engine control unit (14).

7. Method according to claim 5 or 6, **characterized in that** to determine the mass of the motor vehicle (1) and/or the mass of the trailer (2), a signal from one or more of the following sensors is evaluated: a seat occupancy sensor (19) of the motor vehicle (1), a tire pressure sensor (22) of the motor vehicle (1) and/or the trailer (2), a fill level sensor (21) of a fuel tank (20) of the motor vehicle (1), an inclination sensor of the motor vehicle (1), a distance sensor of the motor vehicle (1) and/or the trailer (2) which measures a distance to a ground, and a weighing sensor of the motor vehicle (1) and/or the trailer (2).

8. Method according to any of claims 4 to 7, **characterized in that**
- the presence or absence of the trailer (2) and/or
- the mass of the motor vehicle (1) and/or
- the type and/or the mass and/or the form factor of the trailer (2)
is queried by the engine control unit (14) at an operating unit (17) of the motor vehicle (1).

9. Method according to claim 8, **characterized in that** an input at the operating unit (17) is checked by the engine control unit (14) during driving operation, and if the test result does not match the input,
- the selected measure of the driving resistance to be overcome is changed by the engine control unit (14) and/or
- further driving operation is hindered by the engine control unit (14) and/or
- a warning message regarding the test result not matching the input is displayed on a display and/or
- a new query operation is carried out and/or
- an error entry regarding the test result not matching the input is stored in the engine control unit (14).

10. Method according to claim 9, **characterized in that** for or after a subsequent cold start, the changed measure of the driving resistance to be overcome is maintained and/or the warning message is displayed again if the presence of the same trailer (2) is detected.

11. Method according to claim 4 and claim 10, **characterized in that** the presence of the same trailer (2) is detected by the fact that the occupancy state of the plug connector (15) has not been changed or has been changed twice within a period of time which is less than a defined limit value.

12. Method according to any of claims 5 to 10, **characterized in that** a plurality of mass ranges are defined for the mass of the motor vehicle (1) and/or for the mass of the trailer (2) and/or a plurality of form factor ranges are defined for the form factor of the trailer (2).

13. Method according to any of the preceding claims, **characterized in that** operation of the combustion motor (4) is limited until the light-off temperature of the exhaust gas aftertreatment device (13) is reached.

14. Method according to any of the preceding claims, **characterized in that** the limitation with regard to the deliverable torque is continuously reduced as the temperature of the exhaust gas aftertreatment device (13) increases.

15. Engine control unit (14) for a motor vehicle (1) having an internal combustion engine (2) which comprises a combustion motor (4) and an exhaust gas system (12) having at least one exhaust gas aftertreatment device (13), having a memory, wherein a computer program is stored in the memory, which computer program is designed to carry out a method according to any of the preceding claims.

## Revendications

1. Procédé permettant de faire fonctionner un véhicule automobile (1) comportant un moteur à combustion interne (2) qui comprend un moteur thermique (4) et une conduite de gaz d'échappement (12) comportant au moins un dispositif de post-traitement des gaz d'échappement (13), dans lequel, après un démarrage à froid du moteur à combustion interne (2), lors duquel le dispositif de post-traitement des gaz d'échappement (13) présente une température qui est inférieure à une température de démarrage, un fonctionnement du moteur thermique (4) est limité au moyen d'une commande de moteur (14) en fonction d'une température du dispositif de post-traitement des gaz d'échappement (13) en ce qui concerne le couple (M) pouvant être fourni par le moteur thermique (4), dans lequel un fonctionnement en marche du véhicule automobile (1) est empêché jusqu'à ce qu'une valeur limite minimale (M_{G}) du couple (M) pouvant être fourni soit atteinte, **caractérisé en ce que** la valeur limite minimale (M_{G}) est modifiée en fonction d'une résistance à la marche du véhicule automobile (1) à surmonter.

2. Procédé selon la revendication 1, **caractérisé en ce qu'**est utilisée comme mesure pour la résistance à la marche à surmonter la présence ou l'absence d'une remorque (2) attelée au véhicule automobile (1).

3. Procédé selon la revendication 2, **caractérisé en ce que** la présence ou l'absence de la remorque (2) est déterminée automatiquement par la commande de moteur (14).

4. Procédé selon la revendication 3, **caractérisé en ce que** la présence ou l'absence de la remorque (2) est déterminée par un état d'occupation d'un connecteur enfichable (15) du véhicule automobile (1) qui fait partie d'une alimentation électrique de puissance pour la remorque (2).

5. Procédé selon l'une des revendications précédentes,
**caractérisé en ce que** sont utilisés comme mesure pour la résistance à la marche à surmonter une masse et/ou un facteur de forme du véhicule automobile (1) et/ou un type et/ou une masse et/ou un facteur de forme de la remorque (2) et/ou au moins un paramètre de l'air ambiant.

6. Procédé selon la revendication 4 ou 5, **caractérisé en ce que** la masse du véhicule automobile (1) et/ou la masse de la remorque (2) sont déterminées automatiquement par la commande de moteur (14).

7. Procédé selon la revendication 5 ou 6, **caractérisé en ce que,** pour la détermination de la masse du véhicule automobile (1) et/ou de la masse de la remorque (2), un signal d'un ou de plusieurs capteurs suivants est évalué : capteur d'occupation des sièges (19) du véhicule automobile (1), capteur de pression des pneus (22) du véhicule automobile (1) et/ou de la remorque (2), capteur de niveau de remplissage (21) d'un réservoir à carburant (20) du véhicule automobile (1), capteur d'inclinaison du véhicule automobile (1), capteur de distance du véhicule automobile (1) et/ou de la remorque (2), lequel mesure une distance par rapport à un sol, capteur de pesage du véhicule automobile (1) et/ou de la remorque (2).

8. Procédé selon l'une des revendications 4 à 7, **caractérisé en ce que**
- la présence ou l'absence de la remorque (2) et/ou
- la masse du véhicule automobile (1) et/ou
- le type et/ou la masse et/ou le facteur de forme de la remorque (2)
sont interrogés par la commande de moteur (14) sur une unité de manipulation (17) du véhicule automobile (1).

9. Procédé selon la revendication 8, **caractérisé en ce qu'**une entrée sur l'unité de manipulation (17) est vérifiée par la commande de moteur (14) pendant le fonctionnement en marche, dans lequel, en cas de non-concordance du résultat de la vérification avec l'entrée,
- la mesure choisie pour la résistance à la marche à surmonter est modifiée par la commande de moteur (14) et/ou
- un fonctionnement en marche plus poussé est empêché par la commande de moteur (14) et/ou
- un avertissement concernant la non-concordance du résultat de la vérification avec l'entrée est affiché sur un moyen d'affichage et/ou
- une nouvelle interrogation est effectuée et/ou
- une entrée d'erreur concernant la non-concordance du résultat de la vérification avec l'entrée est enregistrée dans la commande de moteur (14).

10. Procédé selon la revendication 9, **caractérisé en ce que,** pour un démarrage à froid ou après un démarrage à froid subséquent, la mesure modifiée pour la résistance à la marche à surmonter est maintenue et/ou l'avertissement est affiché à nouveau, dans la mesure où la présence de ladite remorque (2) est constatée.

11. Procédé selon la revendication 4 et la revendication 10,
**caractérisé en ce que** la présence de ladite remorque (2) est constatée par le fait que l'état d'occupation du connecteur enfichable (15) n'a pas été modifié ou a été modifié deux fois dans un laps de temps inférieur à une valeur limite définie.

12. Procédé selon l'une des revendications 5 à 10, **caractérisé en ce que** plusieurs plages de masse sont définies pour la masse du véhicule automobile (1) et/ou pour la masse de la remorque (2) et/ou plusieurs plages de facteur de forme sont définies pour le facteur de forme de la remorque (2).

13. Procédé selon l'une des revendications précédentes,
**caractérisé en ce que** le fonctionnement du moteur thermique (4) est limité jusqu'à ce que la température de démarrage du dispositif de post-traitement des gaz d'échappement (13) soit atteinte.

14. Procédé selon l'une des revendications précédentes,
**caractérisé en ce que** la limitation concernant le couple pouvant être fourni est réduite de manière continue à mesure que la température du dispositif de post-traitement des gaz d'échappement (13) augmente.

15. Commande de moteur (14) pour un véhicule automobile (1) comportant un moteur à combustion interne (2) qui comprend un moteur thermique (4) et une conduit de gaz d'échappement (12) comportant au moins un dispositif de post-traitement des gaz d'échappement (13),
comportant une mémoire, dans lequel un programme informatique est stocké dans la mémoire, lequel est configuré pour exécuter un procédé selon l'une des revendications précédentes.
